# EUROPÄISCHE PATENTANMELDUNG

(11) **EP 1 179 490 A1**
(43) Veröffentlichungstag der Anmeldung: **13.02.2002**
(21) Anmeldenummer: 01119005.5
(22) Anmeldetag: 06.08.2001
(51) Int. Cl.: B65G 1/137, G06F 17/60

(54) **System und Verfahren zur Lagerverwaltung und Auftragsüberwachung**

(30) Priorität: 07.08.2000 DE 10038409
(71) Anmelder: TBN IDENTIFIKATION UND NETZWERKE GMBH, 40724 HILDEN (DE)
(72) Erfinder: Wilfried Höntzsch, 40721 Hilden (DE)
(74) Vertreter: Weber, Dieter, Dr.

(57) **Zusammenfassung**

Die vorliegende Erfindung betrifft ein System zur Lagerverwaltung und Auftragsüberwachung. Um ein Lagerverwaltungs- und Auftragsüberwachungssystem und ein Verfahren hierfür zur Verfügung zu stellen, das die Änderung des Eintrags des Lagerbestands vereinfacht, sowie die Überwachung von bereits verpacktem Transportgut bis zum Verlassen des Lagers erlaubt, wird erfindungsgemäß ein System vorgeschlagen mit mindestens einem ersten Transportelement, das zur Aufnahme von mindestens einem Transportstück dient, wobei das Transportelement mindestens einen Transponder (4) aufweist, der dafür vorgesehen ist, Daten zu speichern, und mindestens einer Ausleseeinheit (9, 10, 11), die dafür vorgesehen ist, zumindest einen Teil der Daten, die auf Transpondern (4) gespeichert sind, die sich in einem Auslesebereich der Ausleseeinheit (9, 10, 11) befinden oder diese durchqueren, auszulesen.

## Beschreibung

Die vorliegende Erfindung betrifft ein Verfahren zur Lagerverwaltung und Auftragsüberwachung und ein System hierfür.

Trotz eines nach wie vor anhaltenden Trends, Lager- und Vorratshaltung auf ein unbedingt notwendiges Maß zu beschränken und Vorprodukte und Zulieferteile für komplexe, industriell hergestellte Gegenstände möglichst produktions- und zeitnah zu liefern, damit eine große Lagerhaltung vermieden werden kann, gibt es nach wie vor viele Bereiche, in denen eine umfangreiche Lagerhaltung unumgänglich ist, insbesondere wenn Zulieferteile nur schubweise geliefert werden können, wenn es Schwankungen in der Produktionsgeschwindigkeit gibt oder wenn gegebenenfalls auch Ausfallzeiten und Unsicherheiten in der Zulieferung überbrückt werden sollen. Dabei geht jedoch das Bestreben dahin, die Lagerverwaltung einschließlich Bestückung und Auslieferung mit möglichst wenig Personal und auf einer möglichst geringen Grundfläche zu bewerkstelligen.

Bei allen Lagersystemen ist es selbstverständlich notwendig und üblich, die konkret gelagerten Gegenstände gegebenenfalls zusammen mit dem genauen Ort ihrer Ablage zu erfassen und zu notieren, sei es in Lagerbüchern oder sei es, wie es in der Zwischenzeit im allgemeinen üblich ist, in Computersystemen.

Dabei kommt jedoch der Pflege des Datenbestandes in dem gesamten Lagerverwaltungssystem eine Schlüsselrolle zu. Damit die Lagerbestände immer richtig erfaßt werden, die Lager gegebenenfalls rechtzeitig aufgefüllt werden und auch eine dauerhaft Kontrolle über den Ist-Bestand möglich ist, ist es erforderlich, daß das mit der Lagerverwaltung beauftragte Personal die Ausgabe gelagerter Gegenstände sowie die Einlagerung von Gegenständen sorgfältig und genau in den Computer eingibt. Auch wenn nur vereinzelt entsprechende Eingaben vergessen werden, führt dies bereits nach relativ kurzer Zeit zu einem Zustand, in welchem der Ist-Bestand von Gegenständen von dem in einem Computersystem gespeicherten Soll-Zustand erheblich abweicht, was sehr leicht zu Lieferverzögerungen führen kann, da der benötige Gegenstand nicht mehr in ausreichender Menge vorhanden ist.

Des weiteren sind die bekannten Lagerverwaltungssysteme nicht in der Lage, Auskunft zu erteilen, ob eine bereits für einen Kunden zusammengestellte Lieferung das Lager verlassen hat oder nicht. Zudem sind die bekannten Lagerverwaltungssysteme oftmals nicht in der Lage, zu verhindern, daß bereits verpackte Transportgegenstände versehentlich mit einer falschen Auslieferungstour aus dem Lager gebracht werden.

Demgegenüber liegt der vorliegenden Erfindung daher die Aufgabe zugrunde, ein Lagerverwaltungs- und Auftragsüberwachungssystem und ein Verfahren hierfür zur Verfügung zu stellen, das die Änderung des Eintrags des Lagerbestands vereinfacht, sowie die Überwachung von bereits verpacktem Transportgut bis zum Verlassen des Lagers erlaubt.

Erfindungsgemäß wird diese Aufgabe durch ein System zur Lagerverwaltung und Auftragsüberwachung gelöst mit mindestens einem ersten Transportelement, das zur Aufnahme von mindestens einem Transportstück dient, wobei das Transportelement mindestens einen Transponder aufweist, der dafür vorgesehen ist, Daten zu speichern, mit mindestens einer Ausleseeinheit, die dafür vorgesehen ist, zumindest einen Teil der Daten, die auf Transpondern gespeichert sind, die sich in einem Auslesebereich der Ausleseeinheit befinden oder diese durchqueren, auszulesen. Das Transportelement kann hierbei jeder beliebige Gegenstand sein, der in der Lage ist, Transportstücke aufzunehmen. Dies können Beutel, Säcke, Pakete aber auch Container und Paletten sein.

Unter einem Transportstück wird ein beliebiger Gegenstand verstanden, der in dem Lager aufbewahrt wird.

Es versteht sich, daß das Transportelement auch Teil des Transportstücks sein kann. Daher ist es auch möglich, daß der Transponder direkt auf dem Transportstück angebracht ist.

Der Transponder ist ein automatisches Antwortgerät, das auf eine - gegebenenfalls codierte - Abfrage hin eine - gegebenenfalls ebenfalls codierte - Antwort zurücksendet. Die Ausleseeinheit sendet daher ein entsprechendes Abfragesignal, um die entsprechende Antwort des Transponders empfangen zu können. Die Abfragereichweite der Ausleseeinheit bzw. die Sendereichweite der Transponder definiert den Auslesebereich der Ausleseeinheit. Die Ausleseeinheit ist daher in der Lage, sobald ein Transponder sich in dem Auslesebereich befindet, dessen Daten auszulesen. Vorzugsweise wird die Ausleseeinheit und damit der Auslesebereich in der Nähe von Zu- bzw. Ausfahrten des Lagers angeordnet. Verläßt nun beispielsweise ein Transportelement das Lager, so muß es den Auslesebereich passieren. Die Ausleseeinheit kann daher dann die Daten des Transponders auslesen und somit registrieren, daß das Transportelement das Lager verlassen hat. Die im Transponder gespeicherten Daten können im Prinzip beliebig sein. So ist es beispielsweise möglich, jedem Transponder und damit jedem Transportelement eine eigene Identifikationsnummer zuzuordnen. Wenn dann die Ausleseeinheit einen Transponder dieser Identifikationsnummer registriert, kann eindeutig bestimmt werden, welches Transportelement das Lager verlassen hat.

Besonders bevorzugt ist eine Ausführungsform, bei welcher der Transponder wiederbeschreibbar ist. Dies ermöglicht es, daß auf dem Transponder Daten gespeichert werden, die die aufgenommenen Transportstücke näher charakterisieren. Überdies können die Transponder dann kostensparend wiederverwendet werden.

Zwar ist es prinzipiell möglich, das erfindungsgemäße Verfahren ohne beschreibbare bzw. wiederbeschreibbare Transponder durchzuführen, so daß der Transponder beispielsweise lediglich eine Identifikationsnummer aufweist, mit deren Hilfe in einer Datenbank die entsprechenden Inhaltsdaten abgelesen werden können. Dies setzt jedoch voraus, daß zum Zeitpunkt des Auslesens des Transponders Zugriff auf die Datenbank besteht. Die wiederbeschreibbaren Transponder haben demgegenüber den zusätzlichen Vorteil, daß auch ohne Zugriff auf die Datenbank allein auf Grundlage der eingelesenen Daten Rückschlüsse auf die aufgenommenen Transportstücke gezogen werden können.

Eine besonders zweckmäßige Ausführungsform sieht vor, daß die Ausleseeinheit mindestens zwei Antennen aufweist, die vorzugsweise derart voneinander beabstandet angeordnet sind, daß das Transportelement zwischen zwei Antennen hindurch bewegt werden kann. Die Ausleseeinheit hat dadurch die Form eines Tores bzw. Gates. Jedes Tor bzw. Gate kann in der Nähe eines Ausgangs bzw. Eingangs eines Lagers montiert werden. Wird nun ein Transportelement beispielsweise auf einem Gabelstapler aus dem Lager herausbewegt, so muß der Gabelstapler lediglich durch die beiden beabstandeten Antennen hindurch fahren, um ein automatisches Auslesen der Transponder zu gewährleisten.

Besonders bevorzugt ist die Ausleseeinheit mit einem Datenverarbeitungssystem verbunden. Dies ermöglicht das sofortige Austragen bzw. Eintragen von Transportstücken, die das Lager verlassen oder betreten haben, in die entsprechende Lagerverwaltungssoftware. Überdies kann eine entsprechende Lagerverwaltungssoftware zusätzlich die Information erhalten, ob eine entsprechende Lieferung bereits das Lager verlassen hat oder nicht. So ist es also beispielsweise möglich, bei verspätet eintreffenden Bestellungsstornierungen oder Umbestellungen die Lieferung zu lokalisieren und gegebenenfalls zu stoppen bzw. zu modifizieren.

Zweckmäßigerweise weist das System eine Beschreibevorrichtung auf, die dafür vorgesehen ist, den mindestens einen Transponder zu beschreiben. Dabei ist die Beschreibevorrichtung mit Vorteil ebenfalls mit dem Datenverarbeitungssystem bzw. der Lagerverwaltungssoftware verbunden. Ein Auslieferungsauftrag kann dann wie folgt durchgeführt werden. Zunächst werden die georderten Transportstücke manuell oder automatisch in bzw. auf das entsprechende Transportelement gepackt. Dann wird der Transponder, der diesem Transportelement zugeordnet ist, entsprechend beschrieben. In der Lagerverwaltungssoftware kann jetzt bereits eingetragen werden, daß die entsprechenden Transportstücke im Lager nicht mehr verfügbar sind. Als nächstes kann das Transportelement zum Ausgang bewegt werden. In dem Moment, in dem das Transportelement die Ausleseeinheit bzw. das Tor passiert, wird der Transponder ausgelesen und der Lagerverwaltungssoftware gemeldet, daß das betreffende Transportelement mit den entsprechenden Tranportstücken das Lager verlassen hat.

Für besondere Anwendungsfälle kann es von Vorteil sein, wenn mindestens ein zweites Transportelement vorgesehen ist, das zur Aufnahme von mindestens einem ersten Transportelement dient, wobei das zweite Transportelement mindestens einen Transponder aufweist, der dafür vorgesehen ist, Daten zu speichern. Das zweite Transportelement kann jedes beliebige Transportelement sein, das in der Lage ist, mindestens ein erstes Transportelement aufzunehmen. Ist beispielsweise das erste Transportelement ein kleiner Behälter, so kann das zweite Transportelement ein Container oder eine Palette sein. Ferner weist das zweite Transportelement ebenfalls einen Transponder auf. Es ist daher möglich, wenn das zweite Transportelement bewegt werden soll, zunächst lediglich den Transponder des zweiten Transportelements auszulesen, ohne alle Transponder der einzelnen ersten Transportelemente auszulesen.

Hierbei ist es besonders zweckmäßig, wenn in dem mindestens einen Transponder, welcher dem zweiten Transportelement zugeordnet ist, Informationen über die von dem zweiten Transportelement aufgenommenen ersten Transportelement abgespeichert sind. Eine Information könnte beispielsweise die Anzahl der aufgenommenen ersten Transportelemente sein. Des weiteren könnten selbstverständlich auch die Identifikationsnummern der Transponder der aufgenommenen ersten Transportelement gespeichert sein.

Besonders bevorzugt weist daher die Ausleseeinheit eine Vergleichseinrichtung auf, die die Daten der Transponder, die dem ersten Transportelement zugeordnet sind und die Daten des Transponders, der dem zweiten Transportelement zugeordnet ist, vergleicht. Ist daher beispielsweise in dem Transponder des zweiten Transportelements die Anzahl der aufgenommenen ersten Transportelemente gespeichert, so kann während des Durchlaufens der Ausleseeinheit überprüft werden, ob die Anzahl der auf dem zweiten Transportelement aufgenommenen ersten Transportelemente korrekt ist. Von der Ausleseeinheit werden dazu sowohl die Transponder des zweiten Transportelements als auch die Transponder der ersten Transportelemente ausgelesen. Zeigt der Vergleich Unstimmigkeiten auf, so muß der Inhalt des zweiten Transportelements kontrolliert werden. Durch diese Vergleichseinrichtung ist es möglich, die Fehlerquote bei der Auslieferung von Transportstücken deutlich zu reduzieren.

Hinsichtlich des Verfahrens wird die eingangs gelöste Aufgabe durch ein Verfahren zur Lagerverwaltung gelöst, das die Schritte aufweist:
a) Zuweisen von Inhaltsdaten zu einem Transponder, der einem aus einer Gruppe von Transportelementen zugeordnet ist, die aus mindestens einem ersten Transportelement besteht, wobei die Inhaltsdaten Informationen über gegebenenfalls auf dem ersten Transportelement aufgenommene Transportstücke repräsentieren,
b) Auslesen zumindest eines Teiles der Inhaltsdaten des Transponders, wenn dieser sich in einem Auslesebereich befindet oder diesen durchquert,
c) Änderung des in einer Speichervorrichtung dokumentierten Bestandes des Lagers in Abhängigkeit von den ausgelesenen Inhaltsdaten.

Wird beispielsweise in dem Lager ein Kundenauftrag zusammengestellt, so werden die einzelnen geordneten Transportstücke auf bzw. in dem ersten Transportelement zusammengestellt. Sind alle für das erste Transportelement vorgesehenen Transportstücke in oder auf dem ersten Transportelement aufgenommen, so werden dem Transponder, der dem ersten Transportelement zugeordnet ist, Inhaltsdaten zugewiesen. Diese Zuweisung kann beispielsweise dadurch erfolgen, daß in einem entsprechenden Datenverarbeitungssystem vermerkt wird, welche Waren sich in bzw. auf der ersten Transporteinrichtung mit dem Transponder mit einer bestimmten Identifikationsnummer befinden.

Wird dann das Transportelement aus dem Lager entfernt, so passiert es den Auslesebereich und die Inhaltsdaten des Transponders werden ausgelesen. Es erfolgt daraufhin eine entsprechende Meldung an eine Speichervorrichtung, die beispielsweise die Lagerverwaltungssoftware beinhaltet, um zum Beispiel den Bestand des Lagers in Abhängigkeit von den ausgelesenen Inhaltsdaten zu korrigieren.

Besonders bevorzugt ist ein Verfahren, bei dem in Schritt a) die Zuweisung von Inhaltsdaten durch ein Beschreiben des Transponders mit Inhaltsdaten erfolgt. Auch wenn, wie bereits dargelegt, die Zuweisung lediglich in einem Datenverarbeitungssystem erfolgen kann, so ist das direkte Beschreiben des Transponders mit Inhaltsdaten besonders bevorzugt. Dies ermöglicht es, die Transponderdaten auszulesen und Informationen über die gegebenenfalls auf dem ersten Transportelement aufgenommenen Transportstücke zu erhalten, ohne daß auf das Datenverarbeitungssystem zugegriffen werden muß. So ist es beispielsweise möglich, Schritt c) nicht sofort, sondern beispielsweise jede Stunde oder am Ende eines Tages durchzuführen. Zwar findet dann keine unmittelbare Aktualisierung des Lagerbestandes statt, dennoch kann aber zu bestimmten Zeitpunkten, beispielsweise am Ende eines Tages, genau abgelesen werden, wie der Bestand des Lagers ist. Dies ist insbesondere dann von Vorteil, wenn aus technischen Gründen eine direkte Verbindung der Ausleseeinheit mit dem Datenverarbeitungssystem nicht möglich ist.

Ein besonders bevorzugtes Verfahren weist vor Schritt b) zusätzlich noch den Schritt auf:
a1) Zuweisen von Inhaltsdaten zu einem Transponder, der einem aus einer Gruppe von mindestens einem zweiten Transportelement zugeordnet ist, wobei die Inhaltsdaten Informationen über gegebenenfalls auf bzw. in dem zweiten Transportelement aufgenommene erste Transportelemente repräsentieren.

Sind beispielsweise die ersten Transportelemente Kisten oder Behälter, so können diese auf eine Palette, die dann das zweite Transportelement darstellt, aufgesetzt werden. Das zweite Transportelement bzw. die Palette weist ebenfalls einen Transponder auf, auf den entsprechende Informationen über die aufgenommen Behälter bzw. ersten Transportelement zugewiesen werden. Eine Möglichkeit besteht darin, in die Transponder des zweiten Transportelementes lediglich die Anzahl der aufgenommenen ersten Transportelemente aufzunehmen. Dies hat zum Beispiel den Vorteil, daß für das Auffinden entsprechender zusammengestellter erster Transportelemente lediglich der Transponder des zweiten Transportelements ausgelesen werden muß.

In einer besonders bevorzugten Ausführungsform weist das Verfahren zwischen Schritt b) und c) zusätzlich die Schritte auf:
b1) Vergleichen der ausgelesenen Inhaltsdaten der Transponder der ersten Transportelemente mit den ausgelesenen Inhaltsdaten der Transponder der zweiten Transportelemente und
b2) Ausgeben eines Bestätigungs- oder Warnsignals in Abhängigkeit von dem Vergleichsergebnis.

Ein weiterer Vorteil des Transponders des zweiten Transportelements besteht darin, daß während das zweite Transportelement samt den darin bzw. auf ihm aufgenommenen ersten Transportelementen die Ausleseeinheit passiert, durch Vergleich festgestellt werden kann, ob noch alle ersten Transportelement auf dem zweiten Transportelement vorhanden sind. Sollten sich hier Abweichungen ergeben, so wird dies beispielsweise der Datenverarbeitungssoftware oder aber dem Lagerpersonal mitgeteilt, so daß gegebenenfalls eine Kontrolle erfolgen kann.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 ein Flußdiagramm, das einen Verfahrensablauf gemäß der vorliegenden Erfindung darstellt,
Figur 2 eine schematische Darstellung des Transponderbeschreibevorgangs und
Figur 3 eine schematische Darstellung der Ausleseeinheit.

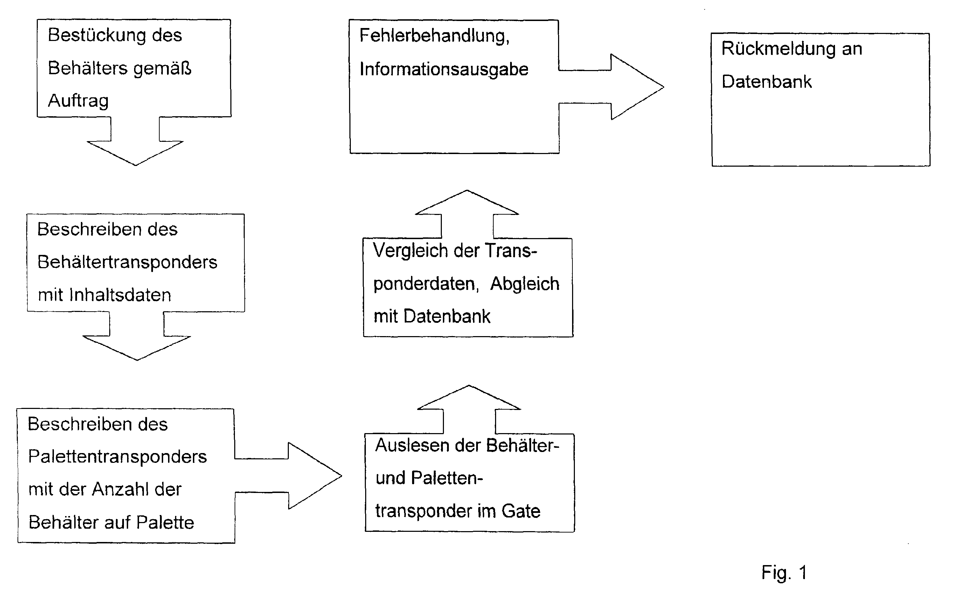

In Figur 1 ist beispielhaft ein Ablaufdiagramm einer Warenausgabe gemäß dem erfindungsgemäßen Verfahren dargestellt. Zunächst erfolgt eine Bestückung des Behälters, der hier das erste Transportelement darstellt, gemäß einem (Kunden-) Auftrag (siehe Figur 1 links oben). Der Auftrag kann beispielsweise ein Kundenauftrag sein. Nach der Bestückung werden die entsprechenden Behältertransponder mit Daten beschrieben. Die Inhaltsdaten können dazu beispielsweise aus einer Sendungs- bzw. Auftragsnummer und/oder einer Empfängerkennung und/oder aus der Anzahl der Behälter, die zu einer Sendung gehören und/oder der Tournummer bestehen. Schließlich werden die Behälter auf eine Palette gepackt und anschließend der Palettentransponder beschrieben. In der gezeigten Ausführungsform wird auf den Palettentransponder lediglich die Anzahl der Behälter auf der Palette eingetragen. Alternativ dazu könnte jedoch auch jeweils die Identifikationsnummer der aufgenommenen Behältertransponder oder andere charakteristische Eigenschaften vermerkt werden.

Wird nun die Palette, beispielsweise mit Hilfe eines Gabelstaplers, aus dem Lager herausgefahren, so passiert sie die Ausleseeinheit bzw. das Gate. Im Gate wird im nächsten Schritt der Behälter- und Palettentransponder ausgelesen. Dies erlaubt einen Abgleich der Datenbankeinträge. Überdies kann ein Vergleich der Transponderdaten durchgeführt werden. Weicht nämlich die auf dem Palettentransponder vermerkte Anzahl der Behälter auf der Palette von der registrierten Anzahl der Behältertransponder ab, so wird eine Fehlermeldung ausgegeben. Das Lagerpersonal kann dann eine entsprechende Kontrolle durchführen.

Im übrigen ist es möglich, beispielsweise dem Fahrer des Gabelstaplers nach Durchfahren des Gates zu signalisieren, in welchen Lkw bzw. zu welcher Tour die entsprechende Palette geliefert werden soll. Somit kann gleichzeitig noch sichergestellt werden, daß die betreffende Palette nicht versehentlich in einen falschen Laster geladen wird. Selbstverständlich ist auch der umgekehrte Weg möglich, nämlich daß die Tournummer oder LKW-Nummer bei Passieren der Ausleseeinheit in das Datenverarbeitungssystem eingetragen wird. Dabei werden in der Ausleseeinheit die Inhaltsdaten automatisch erfaßt und es muß nur noch die Tournummer oder LKW-Nummer eingetragen werden. So ist es, insbesondere bei Lagerhallen mit mehreren Ausgängen oder Ausgaberampen, zweckmäßig, wenn jedem (Waren-)Ausgang ein eigenes Gate zugeordnet wird und der automatisch erfaßten Ware die Gatenummer und damit die LKW-Nummer zugeordnet wird.

Schließlich erfolgt eine Rückmeldung an die Datenbank, so daß eingetragen werden kann, welche Waren auf welcher Palette in welchem Lkw das Lager verlassen haben. Besonders bevorzugt ist eine Ausführungsform, bei der das Warenbestellprogramm des Kunden auf die Datenbank zugreifen kann, so daß der Kunde jederzeit "on-line" erfahren kann, ob die von ihm bestellte Ware das Warenlager bereits verlassen hat oder nicht.

Das System bzw. Verfahren funktioniert auch im umgekehrten Fall. Werden nämlich die Behälter von dem Kunden zurückgegeben, so werden diese ebenfalls durch das Gate gefahren. Dabei werden die Behälter registriert und eine Entlastung des Kundens und gegebenenfalls eine Gutschrift eines entsprechenden Pfandbetrages kann erfolgen. Dabei kann es im Bedarfsfall von Vorteil sein, wenn der Kunde die Rücklaufbehältertransponder beschreiben kann, so daß registriert werden kann, ob beispielsweise ein Leerbehälter vorliegt, ob ein Behälter mit unveränderter Warenbestückung oder ein Behälter mit teilweiser Warenrücklieferung vorliegt. Dementsprechend kann die Ware dem Lagerbestand wieder zugeführt werden und die entsprechende Palette zu dem gewünschten Ort transportiert werden, zum Beispiel dem Lagerplatz für Leerbehälter oder der Reklamationsabteilung.

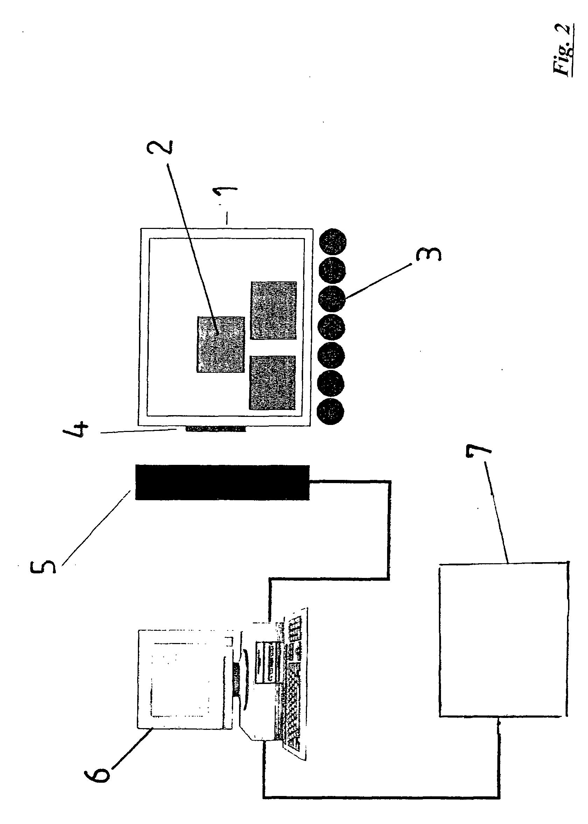

In Figur 2 ist schematisch eine Einheit zum Beschreiben des Behältertransponders dargestellt. Der mit Ware 2 befüllte Behälter 1 wird auf der Förderstrecke 3 fortbewegt. An der Außenseite des Behälters 1 ist der Behältertransponder 4 angebracht. Mit Hilfe der Antenne 5 kann der Behältertransponder beschrieben werden. Die Antenne 5 ist mit einem Computer 6 verbunden, der wiederum über eine Netzwerkanbindung Zugriff auf die Datenbank der Lagerverwaltungssoftware hat und gegebenenfalls eine Schnittstelle zu anderen Kundenprogrammen aufweist. Mit Hilfe der Antenne 5 kann der Behältertransponder mit den entsprechenden Inhaltsdaten beschrieben werden. In analoger Weise werden die Palettentransponder beschrieben.

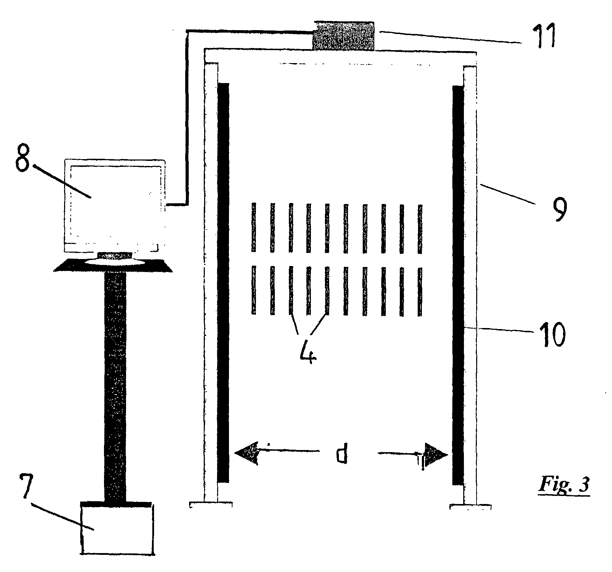

In Figur 3 ist eine schematische Abbildung der Ausleseeinheit gezeigt. Die Ausleseeinheit hat hier die Form eines Tores bzw. Gates. Das Gate besteht aus einem Aluprofilrahmen 9. Die Seitenwände des Tores 9 haben einen Abstand von etwa d = 1,6 m. An der Innenseite der Torwände sind die Antennen in einem Antennengehäuse 10 aufgenommen. An der Oberseite des Tores ist ein Umsetzer 4 angeordnet, der die Antennensignale auf entsprechende Signale, die von einem PC eingelesen werden können, umsetzt. Das Gate weist ein PC-Terminal 8 auf, das über eine Netzwerkanbindung 7 verfügt. Wird nun eine Palette mit mehreren Behältern durch das Gate gefahren, so werden alle Transponder gleichzeitig ausgelesen.

Durch die erfindungsgemäße Ausleseeinheit ist eine Überwachung des Transportgutes möglich. Es versteht sich, daß auch mehrere Ausleseeinheiten vorgesehen sein können. So ist beispielsweise das Vorsehen einer Ausleseeinheit an der Verbindungstür zwischen zwei benachbarten Lagerräumen für manche Anwendungsfälle von Vorteil.

Es kann darüber hinaus sogar von Vorteil sein, wenn die Ausleseeinheit auf oder an jedem LKW vorgesehen wird.

## Patentansprüche

1. System zur Lagerverwaltung und Auftragsüberwachung mit mindestens einem ersten Transportelement (1), das zur Aufnahme von mindestens einem Transportstück (2) dient, wobei das Transportelement (1) mindestens einen Transponder (4) aufweist, der dafür vorgesehen ist, Daten zu speichern, und
mindestens einer Ausleseeinheit (9, 10, 11), die dafür vorgesehen ist, zumindest einen Teil der Daten, die auf Transpondern (4) gespeichert sind, die sich in einem Auslesebereich der Ausleseeinheit (9,10,11) befinden oder diese durchqueren, auszulesen.

2. System zur Lagerverwaltung nach Anspruch 1, **dadurch gekennzeichnet, daß** der Transponder (4) wiederbeschreibbar ist.

3. System nach Anspruch 1 oder 2, **dadurch gekennzeichnet, daß** die Ausleseeinheit (9, 10, 11) mindestens zwei Antennen (10) aufweist, die vorzugsweise derart voneinander beabstandet angeordnet sind (Abstand d), daß das Transportelement (1) zwischen zwei Antennen (10) hindurchbewegt werden kann.

4. System nach einem der Ansprüche 1 bis 3, **dadurch gekennzeichnet, daß** die Ausleseeinheit (9,10,11) mit einem Datenverarbeitungssystem (8, 7) verbunden ist.

5. System nach einem der Ansprüche 2 bis 4, **dadurch gekennzeichnet, daß** eine Beschreibevorrichtung (5) dafür vorgesehen ist, mindestens einen Transponder (4) zu beschreiben.

6. System nach einem der Ansprüche 2 bis 5, **dadurch gekennzeichnet, daß** in dem mindestens einem Transponder (4) Informationen über die von dem Transportelement (1) aufgenommenen Transportstücke (2) gespeichert sind.

7. System nach einem der Ansprüche 1 bis 6, **dadurch gekennzeichnet, daß** mindestens ein zweites Transportelement vorgesehen ist, das zur Aufnahme von mindestens einem ersten Transportelement (1) dient, wobei das zweite Transportelement mindestens einen Transponder (4) aufweist, der dafür vorgesehen ist, Daten zu speichern.

8. System nach Anspruch 7, **dadurch gekennzeichnet, daß** in dem mindestens einen Transponder, welcher dem zweiten Transportelement zugeordnet ist, Informationen über die von dem zweiten Transportelement aufgenommenen ersten Transportelemente (1) abgespeichert sind.

9. System nach Anspruch 8, **dadurch gekennzeichnet, daß** die Ausleseeinheit (9, 10, 11) eine Vergleichseinrichtung aufweist, die die Daten der Transponder (4), die den ersten Transportelementen (1) zugeordnet sind, mit den Daten der Transponder, die dem zweiten Transportelement zugeordnet sind, vergleicht.

10. Verfahren zur Lagerverwaltung und Auftragsüberwachung, das die Schritte aufweist:
a) Zuweisen von Inhaltsdaten zu einem Transponder, der einem aus einer Gruppe von mindestens von Transportelementen zugeordnet ist, die aus einem ersten Transportelement besteht, wobei die Inhaltsdaten Informationen über gegebenenfalls auf dem ersten Transportelement aufgenommene Transportstücke repräsentieren.
b) Auslesen zumindest eines Teiles der Inhaltsdaten des Transponders, wenn dieser sich in einem Auslesebereich befindet oder diesen durchquert, und
c) Aktualisieren des in einer Speichervorrichtung dokumentierten Bestandes des Lagers in Abhängigkeit von den ausgelesenen Inhaltsdaten.

11. Verfahren nach Anspruch 10, **dadurch gekennzeichnet, daß** Schritt a) die Zuweisung von Inhaltsdaten durch ein Beschreiben des Transponders mit Inhaltsdaten erfolgt.

12. Verfahren nach Anspruch 10 oder 11, **dadurch gekennzeichnet, daß** in Schritt b) in der Nähe eines Ausgangs des Lagers durchgeführt wird.

13. Verfahren nach einem der Ansprüche 10 bis 12, **dadurch gekennzeichnet, daß** es vor Schritt b) zusätzlich den Schritt aufweist:
a1) Zuweisen von Inhaltsdaten zu einem Transponder, der einem aus einer Gruppe von mindestens einem zweiten Transportelement zugeordnet ist, wobei die Inhaltsdaten Informationen über gegebenenfalls auf dem zweiten Transportelement aufgenommene erste Transportelemente repräsentieren.

14. Verfahren nach Anspruch 13, **dadurch gekennzeichnet, daß** in Schritt a1) die Inhaltsdaten, die Anzahl der auf dem zweiten Transportelement aufgenommenen ersten Transportelemente beinhalten.

15. Verfahren nach Anspruch 13 oder 14, **dadurch gekennzeichnet, daß** es zwischen Schritt b) und c) zusätzlich die Schritte aufweist:
b1) Vergleichen der ausgelesenen Inhaltsdaten der Transponder der ersten Transportelemente mit den ausgelesenen Inhaltsdaten der Transponder der zweiten Transportelemente und
b2) Ausgeben eines Bestätigungs-, Hinweis- oder Warnsignals in Abhängigkeit von dem Vergleichsergebnis.
